(19) Europäisches Patentamt
European Patent Office
Office européen des brevets

(11) **EP 2 579 112 B1**

(12) **EUROPÄISCHE PATENTSCHRIFT**

(45) Veröffentlichungstag und Bekanntmachung des Hinweises auf die Patenterteilung:
**01.01.2014 Patentblatt 2014/01**

(21) Anmeldenummer: **11184055.9**

(22) Anmeldetag: **06.10.2011**

(51) Int Cl.:
***G05B 13/02*** *(2006.01)*

(54) **Regeleinrichtung**

Regulating device

Dispositif de régulation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.04.2013 Patentblatt 2013/15**

(73) Patentinhaber: **Siemens Aktiengesellschaft 80333 München (DE)**

(72) Erfinder:
• **Grieb, Herbert**
**76316 Malsch (DE)**
• **Lohner, Lena, Dr.**
**76187 Karlsruhe (DE)**
• **Pfeiffer, Bernd-Markus, Dr.**
**76744 Wörth (DE)**

(56) Entgegenhaltungen:
**EP-A1- 2 228 491      DE-A1- 3 606 640
DE-B1- 2 528 313      US-A1- 2006 190 099**

EP 2 579 112 B1

**Beschreibung**

Die Erfindung betrifft eine Regeleinrichtung für einen Prozess, in welcher ein Totzonenglied einem linearen dynamischen Regler vorgeschaltet ist, gemäß dem Oberbegriff des Anspruchs 1.

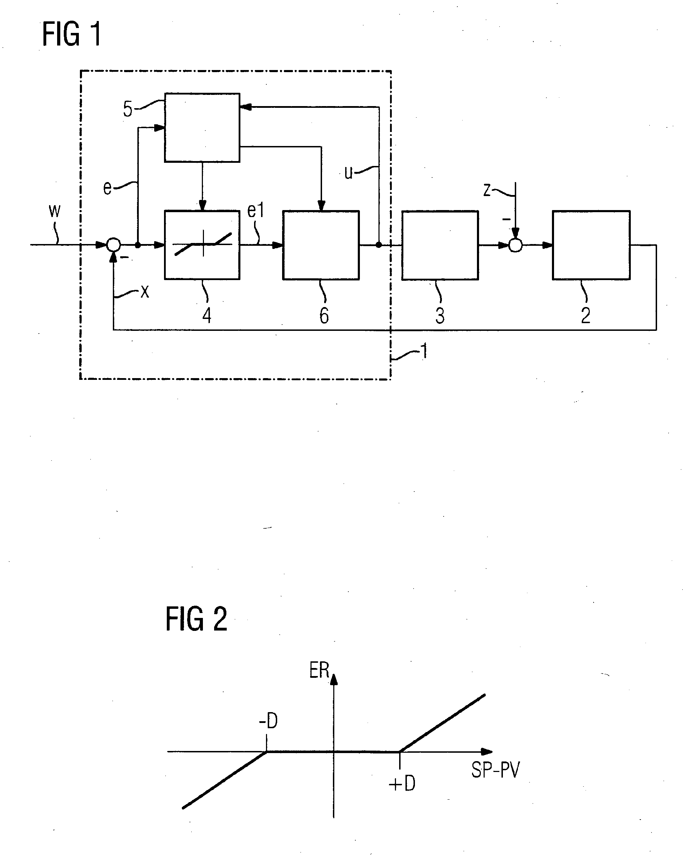

Als lineare dynamische Regler, welche bei ihrer Verwendung in einer Regeleinrichtung ein Totzonenglied vorschaltbar ist, sind aus dem Funktionshandbuch "Prozessleitsystem PCS 7, PCS 7 Advanced Process Library V71", 03/2009 beispielsweise PID-Regler, die je nach Ausgestaltung auch als P-, PI- oder PD-Regler bezeichnet werden können, oder modellprädiktive Regler, die dort als ModPreCon bezeichnet werden, bekannt. Die Übertragungsfunktion eines dort beschriebenen Totzonenglieds ist in Figur 2 dargestellt. Bei vorgeschaltetem Totzonenglied wird eine auf den Regler gegebene Regeldifferenz aus einem wirksamen Sollwert SP und einem Prozesswert PV gebildet und steht am Ausgang ER für den Regler zur Verfügung. Um Störungen im eingeschwungenen Zustand oder ein unvermeidliches Messrauschen zu unterdrücken, kann die Totzone aktiviert und die untere Zonengrenze -D (Deadband) gemeinsam mit der oberen Zonengrenze D parametriert werden. Wird D gleich 0 gesetzt, ist die Totzone deaktiviert, bei D ungleich 0 dagegen aktiviert. Die Totzone wird vom Anwender parametriert und ist im Betrieb konstant. Dabei wird die Totzone im Idealfall so parametriert, dass die Wahrscheinlichkeit von Stelleingriffen gering ist, wenn die Regelgröße sich innerhalb der Totzone eingeschwungen hat. Dies erfordert eine sinnvolle Wahl der Breite der Totzone.

Primär richtet sich die Breite der Totzone nach der verfahrenstechnisch gewünschten Präzision der Regelung, d. h. nach den maximal zulässigen, bleibenden Regelabweichungen, und eventuell, z. B. wenn ein schaltendes Stellglied verwendet wird, nach der Änderung der Regelgröße bei der minimal möglichen Änderung der Stellgröße. Im Hinblick auf die Minimierung von Stelleingriffen helfen die folgenden Einstellregeln dabei, die Totzone so breit zu wählen, dass eine Varianz der Regelgröße, die beispielsweise aufgrund von Messrauschen oder Quantisierungsrauschen unvermeidlich ist, nicht zu häufigen Stellbewegungen führt:

- Unter der Annahme einer statistischen Normalverteilung der Werte der Regelgröße um den Sollwert wird als Breite der Totzone das Zwei- bis Dreifache der Standardabweichung der Regelgröße im stationären Zustand verwendet. Falls die Regeleinrichtung mit einem Überwachungsbaustein zur Bestimmung von Kenngrößen für das Regelverhalten ausgestattet ist, der im eingangs genannten Funktionshandbuch auch als Control Performance Management (CPM) oder ConPerMon bezeichnet wird, kann die im Überwachungsbaustein berechnete Standardabweichung des Istwerts zur Berechnung der Totzonenbreite herangezogen werden.

- Falls Veränderungen der Regelgröße durch eine Quantisierung der Stellgröße nur schrittweise erfolgen, z. B. wegen einer Pulsbreitenmodulation mit definierter Mindestimpulsdauer, wegen eines Schrittreglers mit definierter Mindestschrittweite oder bei einem elektropneumatischen Stellungsregler mit Haftreibung in der Stopfbuchse des pneumatischen Antriebs, richtet sich die Breite der Totzone nach der Stellgrößenquantisierung, die mit der jeweiligen Prozessverstärkung zu multiplizieren ist. Beispielsweise bei einer Temperaturregelung mit einer Stellgrößenquantifizierung von 5 % und einer Prozessverstärkung von 1,5 °C/% können nur Temperaturen in einem Raster von

$$5 \ \% \ \cdot \ 1,5 \ °C/\% \ = \ 7,5 \ °C$$

genau erreicht werden. Die Totzone muss dann so breit gewählt werden, dass mindestens ein Rasterpunkt, an welchem sich der Prozess stationär aufhalten kann, in die Totzone fällt. Die Grenze D der Totzone ist in diesem Beispiel größer als etwa 3,8 °C einzustellen.

Mit einer Totzone konstanter Breite wird zwar bereits eine gewisse Reduktion der Stelleingriffe erreicht, aber es müssen einige Nachteile in Kauf genommen werden:

- Regelabweichungen, die kleiner als die Totzone sind, werden vom Regler ignoriert, d. h. der Regler regelt diese nicht aus, auch wenn er es ohne vorgeschaltete Totzone könnte. Daher können sich stationäre Zustände des Istwerts der Regelgröße einstellen, deren zeitlicher Mittelwert deutlich vom Sollwert abweicht.

- Wenn sich stationäre Zustände in den Randbereichen der Totzone einstellen, kann es bereits bei kleinsten Störungen immer wieder zu einem Regeleingriff kommen. Nach einem Störereignis, welches zum Verlassen der Totzone führt, bringt der Regler nämlich den Istwert der Regelgröße nur bis zum jeweiligen Rand der Totzone zurück, was bei weiteren Störungen zu erneuten Stelleingriffen führen kann. Dadurch werden Verschleiß und Energieverbrauch des Stellglieds erhöht.

- Insbesondere große Totzonen wirken sich negativ auf das Führungsverhalten des Regelkreises bei Sollwertsprüngen aus. Grund dafür ist, dass der Regler beispielsweise in der Anstiegsphase einer positiven Sprungantwort beim Eintritt der Regeldifferenz in die Totzone zunächst „die Arbeit einstellt". Dies kann zu einem kriechenden Einschwingvorgang führen oder dazu, dass der Regler erst wieder aktiv wird, wenn der Istwert aufgrund eines Überschwingers die obere Grenze der Totzone überschreitet.

Ein dem Regler in einer Regeleinrichtung vorgeschaltetes Totzonenglied kann also bekanntermaßen dazu beitragen, Stellgliedbewegungen und damit den Energieverbrauch und den Verschleiß des Stellglieds zu reduzieren. Dies gilt insbesondere für mechanische Stellglieder, beispielsweise Ventile und Pumpen. Weiterhin ist ein Totzonenglied in der Lage, Dauerschwingungen als Arbeitsbewegung eines Stellglieds, welche durch die Quantisierung der Stelleingriffe hervorgerufen werden, im Regelkreis zu vermeiden.

Ein Einsatz eines vorgeschalteten Totzonenglieds führt jedoch bisher meist zu einer Verschlechterung der Regelgüte, da der exakte Sollwert nur mit einem von der Totzonenbreite abhängigen Offset erreicht wird und nicht, wie bei Weglassen des Totzonenglieds, durch den Mittelwert der Regelgröße. Der Versatz (Offset) der Regelgröße gegenüber dem exakten Sollwert führt zudem dazu, dass die eigentlich zur Reduktion von Stelleingriffen gewählte Totzone häufiger verlassen wird, da die Totzone symmetrisch um den Sollwert und nicht um den erreichten Istwert der Regelgröße liegt. Bei Verlassen der Totzone muss der Regler erneut eingreifen, um den Istwert wieder in den Bereich der Totzone zurückzuführen, so dass die oben genannten Vorteile einer Totzone nur in einem geringeren Umfang erreicht werden können.

Diese Probleme führen dazu, dass Totzonenglieder linearen dynamischen Reglern häufig nur in solchen Fällen vorgeschaltet werden, in denen sie unbedingt notwendig sind, und meist nicht in Fällen, in welchen allein der Verschleiß und Energieverbrauch einer prozesstechnischen Anlage, in welcher die Regeleinrichtung angewendet wird, reduziert werden sollen.

Aus der DE 36 06 640 A1 ist ein Regelsystem bekannt, in welchem zur Verringerung des Stellenergieverbrauchs zwischen Regler und Stellglied ein Totzonenglied eingefügt ist. Zur Adaption des Regelsystems an schwankende Umwelt- und Betriebsbedingungen werden die Beträge der Ansprechschwellen des Totzonenglieds zwischen einer fest vorgegebenen unteren und einer variablen, einen vorgegebenen Maximalwert nicht überschreitenden oberen Grenze angepasst.

In der EP 2 228 491 A1 ist ein Regelverfahren für einen Hybridmotor beschrieben, in welchem ebenfalls ein Totzonenglied zur Anwendung kommt.

Der Erfindung liegt die Aufgabe zugrunde, eine Regeleinrichtung für einen Prozess, in welcher ein Totzonenglied einem Regler vorgeschaltet ist, zu schaffen, mit welcher eine weitere Verbesserung der Reduktion von Stelleingriffen und ein günstigeres Regelverhalten, insbesondere bezüglich der stationären Genauigkeit, erhalten werden können.

Zur Lösung dieser Aufgabe weist die neue Regeleinrichtung der eingangs genannten Art die im kennzeichnenden Teil des Anspruchs 1 angegebenen Merkmale auf. In den abhängigen Ansprüchen sind vorteilhafte Weiterbildungen der Erfindung, in Anspruch 7 ein Regelungsverfahren, in den Ansprüchen 8 und 9 ein entsprechendes Computerprogramm bzw. ein Computerprogrammprodukt beschrieben.

Damit der durch die Regeleinrichtung geregelte Prozess im statistischen Mittel mit seiner Regelgröße in der Mitte der Totzone einschwingt, wird das Totzonenglied vorübergehend beim Auftreten von größeren Regelabweichungen deaktiviert, und zwar unabhängig davon, ob diese durch einen Sollwertsprung oder durch ein Störereignis verursacht worden sind.

Da das Totzonenglied aus einem deaktivierten Zustand heraus erst dann wieder aktivierbar ist, wenn die Regelabweichung einen zweiten Schwellwert unterschreitet, der kleiner als der erste Schwellwert ist, bei welchem die Deaktivierung erfolgte, wird in vorteilhafter Weise die Wahrscheinlichkeit vergrößert, dass die Regeldifferenz lange innerhalb der Totzone verbleibt und somit lange keine weiteren Stelleingriffe mehr nötig werden. Dies führt zu reduziertem Verschleiß und weniger Energieverbrauch insbesondere des im Regelkreis eingesetzten Stellglieds.

Zudem werden die bereits oben genannten Nachteile eines Totzonenglieds, welches nicht automatisch deaktivierbar ist, bezüglich des Führungsverhaltens bei Sollwertsprüngen, z. B. kriechendes Verhalten oder Überschwinger beim Einschwingvorgang, deutlich reduziert. Damit erhöht sich die Akzeptanz für den Einsatz von Totzonengliedern bei Anwendern, da die bisherigen negativen Auswirkungen auf die Regelgüte weitgehend vermieden werden. Somit kommen die durch die neue Regeleinrichtung realisierbaren Energieeinsparungen aufgrund reduzierter Stelleingriffe in deutlich mehr Anwendungsfällen zum Tragen. Dies gilt insbesondere für Regelkreise, in welchen mechanische Stellglieder wie Ventile oder Pumpen verwendet werden. Bei Ventilen ist der Energieverbrauch nämlich direkt abhängig von den zurückgelegten Verfahrwegen, d. h. vom zeitlichen Integral des Stellweges. Speziell bei elektropneumatisch betriebenen Stellventilen ist der Verbrauch an Druckluft proportional zu den gegen eine Federkraft zurückgelegten Verfahrwegen, wenn es sich um einen einfach wirkenden pneumatischen Antrieb handelt. Bei Kreiselpumpen ist für jede Drehzahländerung Energie zur Beschleunigung bzw. zur Abbremsung des Rotors und des mitbewegten Mediums erforderlich, die jeweils verbraucht wird, falls kein Frequenzumrichter mit Rückspeisung der Bremsenergie vorhanden ist. Bei Temperaturregelkreisen mit einer so genannten Split-Range-Regelung für Heizen oder Kühlen eines Prozessmediums in Abhängigkeit der jeweils herrschenden Regelabweichung kommt es darauf an, Schwingungen des Stellsignals zu vermeiden, die zu einem zeitlich kurz aufeinander folgenden Heizen und Kühlen führen und dadurch Energie verschwenden würden. Die mit der neuen Regeleinrichtung erzielte Reduktion von Dauerschwingungen trägt hier in besonders vorteilhafter Weise zu einer Reduktion des Energieverbrauchs bei.

In einer besonders vorteilhaften Ausgestaltung der Erfindung wird der erste Schwellwert, bei dessen Überschreiten das Totzonenglied automatisch deaktivierbar ist, gleich der Totzonengrenze gesetzt. Dadurch kann die Eingabe eines zusätzlichen Parameters bei der Inbetriebsetzung der Regeleinrichtung entfallen und somit der Aufwand der Inbetriebnahme vermindert werden. In diesem Zusammenhang soll darauf hingewiesen werden, dass die Begriffe "Totzonengrenze" und "Totzonenbreite" häufig als Synonym verwendet werden, da für die Bewertung, ob die Regelabweichung innerhalb der Totzone liegt, der Betrag der Regelabweichung herangezogen wird.

In einer weiteren vorteilhaften Ausgestaltung wird der zweite Schwellwert, bei dessen Unterschreiten das Totzonenglied erneut in den aktiven Zustand versetzt wird, gleich dem 0,15fachen der eingestellten Totzonenbreite gewählt. Die Berechnung dieses Parameters kann somit in Abhängigkeit der eingestellten Totzonenbreite automatisch erfolgen, so dass auch hierfür keine gesonderte Eingabe durch einen Bediener erforderlich ist. Es hat sich nämlich in der Praxis gezeigt, dass Werte zwischen dem 0,1fachen und dem 0,2fachen der Totzonenbreite sehr gute Ergebnisse bezüglich der stationären Genauigkeit und der Reduktion von Stelleingriffen liefern. Nachdem die Regelabweichung den zweiten Schwellwert unterschritten hat, kann vorteilhaft noch eine gewisse Zeit abgewartet und danach erneut das Einhalten dieser Grenze durch die Regelabweichung überprüft werden, um sicherzustellen, dass sich der Prozess bei der erneuten Aktivierung des Totzonenglieds bereits am Arbeitspunkt eingeschwungen hat. Damit wird in vorteilhafter Weise erreicht, dass sich der Istwert der Regelgröße nahezu in der Mitte der Totzone stabilisiert hat. Zudem wird die Wahrscheinlichkeit erhöht, dass der Istwert ohne weitere Stelleingriffe lange innerhalb der Totzone verbleibt.

Um bei Regelgrößenschwankungen den Mittelwert der Regelgröße möglichst nahe an den Sollwert zu bringen, kann zusätzlich der Verlauf der Stellgröße in der Regeleinrichtung berücksichtigt werden. Dazu wird nach erneuter Aktivierung des Totzonenglieds eine Stellgröße ausgegeben, welche einem Mittelwert der in einem Zeitfenster im deaktivierten Zustand des Totzonenglieds ausgegebenen Stellgröße entspricht. Wird der zweite Schwellwert unterschritten und das Totzonenglied erneut aktiviert, so wird also nicht die aktuell durch den Regler berechnete Stellgröße für die zukünftige Zeit während des Verbleibens in der Totzone verwendet, sondern der Mittelwert der im eingeschwungenen Zustand ausgegebenen Stellgröße. Da die Stellgröße im vorherigen Betrieb mit deaktiviertem Totzonenglied typischerweise eine kleine Arbeitsbewegung ausführt, wäre ein beim Wechsel in den aktivierten Zustand eher zufällig herausgegriffener Momentanwert der Stellgröße nämlich im Allgemeinen schlechter für ein Halten der Regelgröße in der Nähe des Sollwerts geeignet als der Mittelwert der im eingeschwungenen Zustand ausgegebenen Stellgröße. Damit schwingt sich in vorteilhafter Weise die Regelgröße eher in der Mitte als an den Rändern der Totzone ein. Dadurch werden unnötige Verlagerungen des Mittelwerts der Regelgröße vom Sollwert und somit eine schlechte stationäre Regelgüte vermieden.

Falls die Regeleinrichtung mit einem Überwachungsbaustein zum so genannten Control Performance Monitoring (CPM) ausgestattet ist, wie er beispielsweise im Prozessleitsystem PCS 7 Verwendung findet, können verschiedene Parameter der neuen Regeleinrichtung von ohnehin im Überwachungsbaustein berechneten Kenngrößen abgeleitet werden. Das hat den Vorteil, dass die Ermittlung der Parameter besonders einfach und zuverlässig ist, da auf erprobte Teile des Überwachungsbausteins zurückgegriffen werden kann. So kann zur Bemessung der Totzonenbreite die Standardabweichung der Regelgröße im Arbeitspunkt herangezogen werden. Weiterhin wird im Überwachungsbaustein ein gleitendes Zeitfenster verwendet, welches als Anhaltspunkt für die Dauer von Einschwingvorgängen dienen kann, d. h. für die Zeit, die abgewartet werden soll, bevor die Totzone reaktiviert wird. Zudem wird in dem bekannten Überwachungsbaustein CPM der Mittelwert der Stellgröße im gleitenden Zeitfenster berechnet, der als Wert für die Stellgröße beim Reaktivieren des Totzonenglieds übernommen werden kann. Um diese Stellgröße auszugeben, wird der Regler für einen Abtastzyklus in den Nachführbetrieb mit diesem Stellwert genommen und anschließend die bei Reglern des Prozessleitsystems PCS7 bekannte stoßfreie Hand-/Automatik-Umschaltung genutzt.

Ein Verfahren zur Regelung eines Prozesses, welches mit der Regeleinrichtung durchgeführt werden kann, ist bevorzugt in Software oder einer Kombination von Soft-/Hardware implementiert, so dass die Erfindung auch ein Computerprogramm mit durch einen Computer ausführbaren Programmcodeanweisungen zur Implementierung des Verfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm ist bevorzugt Bestandteil eines Automatisierungsgeräts, durch welches die Regeleinrichtung realisiert ist, oder wird in einem Speicher des Automatisierungsgeräts vorgehalten oder ist in diesen Speicher ladbar, so dass beim Betrieb des Automatisierungsgeräts dieses das Verfahren zur Regelung des Prozesses automatisch ausführt.

Anhand der Zeichnungen, in welchen ein Ausführungsbeispiel der Erfindung dargestellt ist, werden im Folgenden die Erfindung sowie Ausgestaltungen und Vorteile näher erläutert.

Es zeigen:

Figur 1          ein Blockschaltbild eines Regelkreises,

Figur 2          eine Übertragungsfunktion eines Totzonenglieds,

Figur 3          ein Ablaufdiagramm mit den Zustandsübergängen des Totzonengliedes,

Figuren 4 bis 7     Zeitdiagramme zur Verdeutlichung des Regelverhaltens.

Die Figur 1 zeigt ein Blockschaltbild mit verschiedenen Funktionsblöcken, aus welchen eine Regeleinrichtung 1 aufgebaut sein kann, die mit Hilfe eines Stellglieds 3 auf einen Prozess 2 einwirkt. Bei dem Stellglied 3 kann es sich beispielsweise um ein Ventil handeln, bei dem Prozess 2 um ein Rohr, an welchem der Massendurchfluss als Regelgröße x nach Vorgabe eines Sollwerts w eingestellt werden soll. Die exakte Einstellung des Sollwerts w wird durch Störungen z erschwert, bei welchen es sich beispielsweise um Druckschwankungen in dem Rohr 2 handeln kann. Eine als Differenz des Sollwerts w und Werten der Regelgröße x berechnete Regelabweichung e ist in der Regeleinrichtung 1 auf ein Totzonenglied 4 und eine Steuereinrichtung 5 geführt. Durch die Steuereinrichtung 5 ist das Totzonenglied 4 automatisch aktivier- und deaktivierbar. Im deaktivierten Zustand liefert das Totzonenglied 4 eine Ausgangsgröße e1, welche der Regelabweichung e entspricht. Im aktivierten Zustand wird jedoch die Regelabweichung e in einer entsprechend der Übertragungsfunktion gemäß Figur 2 korrigierten Form als Ausgangsgröße e1 auf einen nachgeschalteten Regler 6 gegeben, beispielsweise einen PID-Regler, der eine Stellgröße u für das Stellglied 3 erzeugt. In die Steuereinrichtung 5 ist ein Überwachungsbaustein integriert, der wie das bekannte Control Performance Monitoring verschiedene Kenngrößen für das Regelverhalten bestimmt. Anhand dieser Kenngrößen werden automatisch oder durch Korrektur mit manuell einzugebenden Faktoren verschiedene Parameter der Regeleinrichtung ermittelt: ein erster Schwellwert, bei dessen Überschreitung das Totzonenglied 4 automatisch durch die Steuereinrichtung 5 deaktivierbar ist, ein zweiter Schwellwert, bei dessen Unterschreitung das Totzonenglied 4 automatisch wieder aktivierbar ist, die Breite D (Figur 2) der Totzone des Totzonenglieds 4, eine Zeitdauer, welche mit der erneuten Aktivierung des Totzonenglieds 4 abgewartet wird, nachdem die Regelabweichung e den zweiten Schwellwert im deaktivierten Zustand des Totzonenglieds 4 erstmalig unterschritten hat, sowie die Breite eines Zeitfensters, über welchem der Mittelwert der Stellgröße u zur Bestimmung eines bei erneuter Aktivierung des Totzonenglieds 4 durch den Regler 6 auszugebenden Werts der Stellgröße u betrachtet wird. Die Regeleinrichtung 1 kann beispielsweise durch einen neuen Reglerfunktionsbaustein realisiert werden, der auf der Basis des bekannten PID-Reglers oder des bekannten modellprädiktiven Reglers des Prozessleitsystems PCS 7 im Wesentlichen durch Erweiterung um die neue Steuereinrichtung 5 implementiert ist.

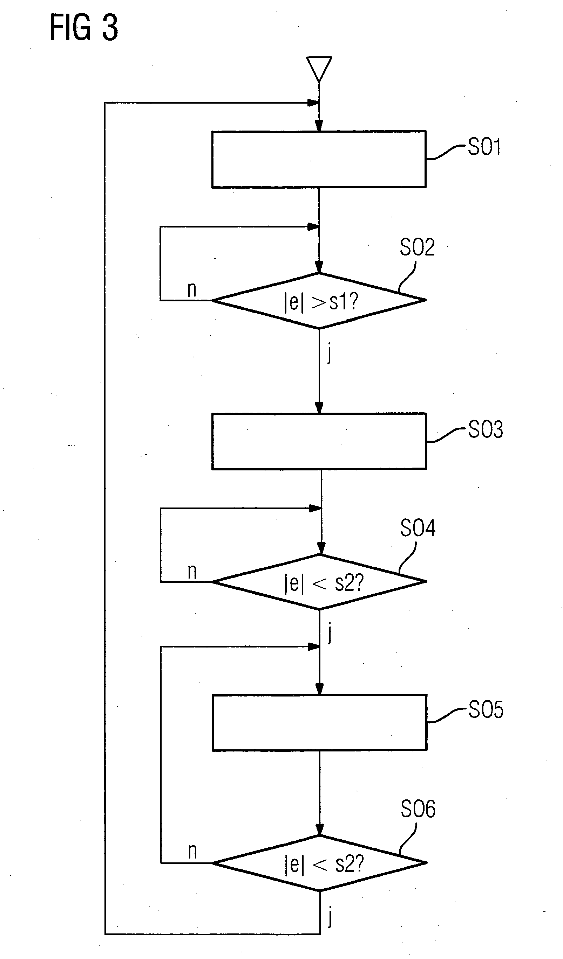

Anhand Figur 3 wird im Folgenden das neue Verfahren zur Regelung eines Prozesses mit Hilfe eines Ablaufdiagramms näher erläutert. Im gezeigten Ausführungsbeispiel beginnt das Verfahren mit einem Schritt S01, in welchem das Totzonenglied in den aktiven Zustand versetzt wird. (In einem anderen Ausführungsbeispiel könnte selbstverständlich vor einer hier später erfolgenden Deaktivierung des Totzonenglieds in den Ablauf eingesprungen werden.) Nachdem das Totzonenglied aktiviert wurde, erfolgt eine Überprüfung der Regelabweichung e auf Überschreiten des ersten Schwellwerts s1 in einer Abfrage S02. Solange die Schwelle s1 nicht überschritten wird, verbleibt das Totzonenglied im aktivierten Zustand. Diese Verzweigung ist mit einem "n" markiert. Verlässt dagegen der Betrag der Regelabweichung e die Totzone, so wird entsprechend einer mit "j" markierten Verzweigung zu einem Schritt S03 übergegangen und das Totzonenglied in den deaktiven Zustand versetzt. Im deaktiven Zustand wird - wie wenn kein Totzonenglied 4 dem Regler 6 (Figur 1) vorgeschaltet wäre - die unkorrigierte Regelabweichung e auf den Reglereingang gegeben, um ein verbessertes Einschwingverhalten und eine bessere stationäre Genauigkeit zu erzielen. Wenn die Regelgröße wieder recht nahe an den Sollwert gebracht ist und die Regelabweichung e somit einen zweiten Schwellwert s2 unterschreitet, wird dies durch eine Abfrage S04 festgestellt und zu einer Aktion S05 übergegangen, in welcher eine bestimmte Zeit abgewartet wird, die der Dauer eines Einschwingvorganges des Regelkreises entspricht. In einer danach folgenden Abfrage S06 wird erneut geprüft, ob die Regelabweichung e kleiner als der zweite Schwellwert s2 ist, d. h. ob sich der Prozess am Arbeitspunkt eingeschwungen hat. Ist dies der Fall, so wird zum Beginn des Verfahrens zurückgesprungen und das Totzonenglied im Schritt S01 erneut aktiviert. Bei noch nicht eingeschwungenem Prozess wird wieder zum Schritt S05 übergegangen und der Abschluss eines Einschwingvorgangs abgewartet.

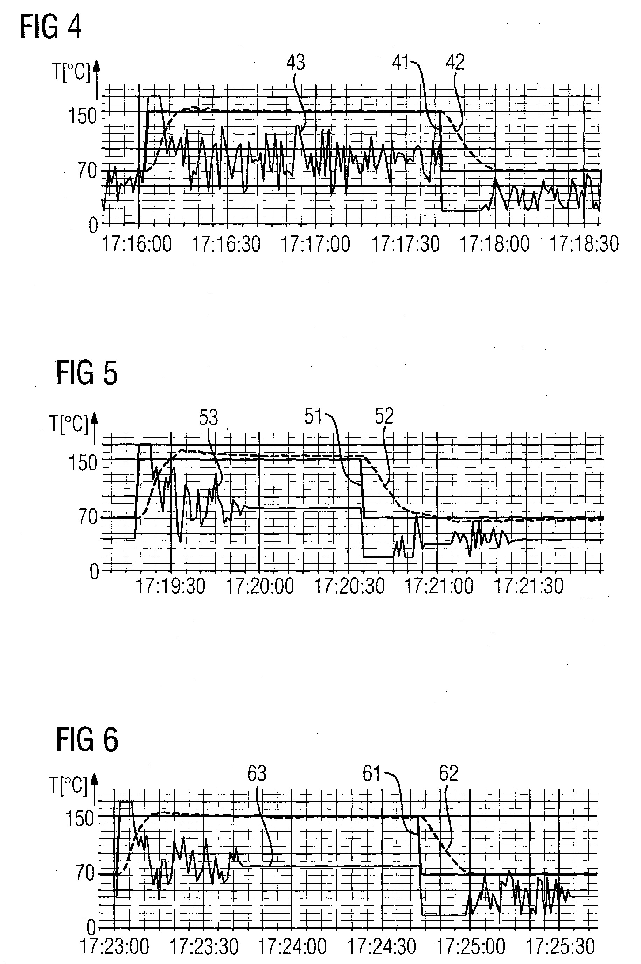

Die vorteilhaften Wirkungen der verschiedenen Maßnahmen sollen zunächst anhand der Zeitdiagramme in den Figuren 4 bis 6 verdeutlicht werden. Diese zeigen verschiedene Simulationsergebnisse für eine Temperaturregelstrecke mit einem Prozessmodell

$$g(s) = \frac{3}{(15\,s+1)(2\,s+1)}$$

und einem PID-Regler mit den Parametern Gain = 5, TI = 7, TD = 2. Auf den Istwert der Regelgröße wirkt ein farbiges Rauschsignal mit der Standardabweichung 0,5°, das aus einem weißen Rauschen mit Hilfe eines Formfilters der Übertragungsfunktion

$$f(s) = \frac{10}{100\,s + 1}$$

erzeugt wird. Die Totzone des Totzonenglieds hat eine großzügig gewählte Breite von D = 5 °C, um die beschriebenen Effekte deutlich sichtbar zu machen. In den Diagrammen ist an der Abszisse die jeweilige Uhrzeit, an der Ordinate die Temperatur T in °C aufgetragen. In den Figuren 4 bis 6 sind Verläufe 41, 51 bzw. 61 des Sollwerts, Verläufe 42, 52 bzw. 62 des Istwerts der Regelgröße sowie Verläufe 43, 53 bzw. 63 der Stellgröße eingezeichnet. Die simulierten Sollwertsprünge bewegen sich zwischen den Temperaturen 70 °C und 150 °C. Unmittelbar nach den Sollwertsprüngen erreichen die Verläufe 43, 53 und 63 der Stellgröße kurzzeitig eine vorgegebene Stellgrößenbegrenzung.

Figur 4 zeigt das Ergebnis einer Simulation, bei welcher das Totzonenglied ständig deaktiviert ist, d. h. einer Regelung ohne Totzone. Der Sollwert wird durch den Istwert im Mittel gut erreicht, allerdings sind wegen der Störung viele Stelleingriffe erforderlich, was an deutlichen Ausschlägen im Verlauf 43 der Stellgröße sichtbar ist. Durch die permanenten Stellgliedbewegungen wird selbst im stationären Zustand viel Betriebsenergie für das Stellglied verbraucht. Zudem ist der Verschleiß des Stellglieds aufgrund der ständigen Stelleingriffe erheblich.

Die in Figur 5 dargestellten Simulationsergebnisse einer Regelung mit einer konstanten Totzone, d. h. einer Regeleinrichtung, bei welcher das Totzonenglied ständig in den aktiven Zustand versetzt ist, zeigen dagegen auch im stationären Zustand eine bleibende Abweichung zwischen Soll- und Istwert, dafür aber keine Stellgrößenänderungen mehr ab einem bestimmten Zustand, der dem Eintreten der Regelabweichung in die Totzone nach dem Einschwingvorgang entspricht. Der Einschwingvorgang selbst dauert etwas länger als bei der anhand Figur 4 erläuterten Regelung ohne Totzone. Die Stellgröße beruhigt sich somit im stationären Zustand, aber das Führungsverhalten ist schlecht und der Istwert der Regelgröße pendelt sich eher am Rand der Totzone und nicht auf dem Sollwert ein.

Wird nun, wie bei den in Figur 6 gezeigten Simulationsergebnissen, das Totzonenglied während des Sollwertsprunges deaktiviert, so folgt der Istwert der Regelgröße schnell und genau dem Verlauf des Sollwerts und im eingeschwungenen Zustand werden Stelleingriffe praktisch nicht mehr erforderlich. Energieverbrauch und Verschleiß des Stellglieds sind somit deutlich geringer. Wie in Figur 6 gut sichtbar, zeigt die Regelung ein gutes Führungsverhalten und der Istwert der Regelgröße wird im stationären Zustand nahe dem Sollwert eingeregelt.

An den Figuren 4 bis 6 wird deutlich, dass die neue Regeleinrichtung sowohl die Vorteile einer Regelung ohne Totzonenglied als auch einer Regelung mit ständig aktiviertem Totzonenglied in sich vereint, ohne jedoch mit deren Nachteilen behaftet zu sein.

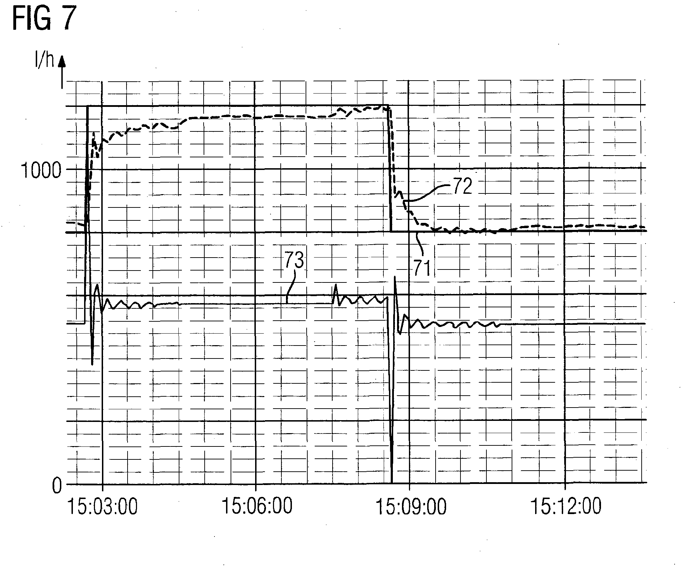

Die neue Regeleinrichtung wurde ebenso erfolgreich mit einem PID-Regler und einem modellprädiktiven Regler an einem realen Anlagenmodell erprobt. Dabei wurde ein PID-Durchflussregler mit einer Totzone von 30 1/h bei einem Arbeitspunkt von 1200 1/h und am ersten Kanal des mehrkanaligen modellprädiktiven Reglers mit 3x3-Struktur, der den Reaktor-Füllstand und die beiden Zuläufe regelt, eine Totzone von 3 % bezogen auf den Gesamtfüllstand von 100 % verwendet. In Figur 7 ist an der Abszisse die Uhrzeit, an der Ordinate der Durchfluss in 1/h aufgetragen. Ein Verlauf 71 des Sollwerts zeigt nahe dem Beginn des Aufnahmezeitraums einen Sprung um 200 1/h nach oben und etwa in der Mitte einen gleich hohen Sprung nach unten. Weiterhin sind Verläufe 72 und 73 für Istwert der Regelgröße bzw. Stellgröße eingezeichnet. Das Totzonenglied, welches dem Durchflussregler vorgeschaltet ist, wird kurz vor dem zweiten Sollwertsprung, der nach unten erfolgt, vorübergehend deaktiviert. Beim ersten, nach oben gerichteten Sollwertsprung mit Totzonenglied im aktiven Zustand zeigen sich ein kriechendes Führungsverhalten und eine nach dem Einschwingvorgang deutlich sichtbare, bleibende Regelabweichung. Durch das vorübergehende Deaktivieren des Totzonenglieds beim Sprung nach unten werden das Führungsverhalten verbessert und die bleibende Regelabweichung reduziert. Somit ist die deutliche Verbesserung der Regelgüte durch die vorübergehende Deaktivierung des Totzonenglieds bei gleichzeitiger Reduktion der Stelleingriffe auch in der Validierung an einer realen Anlage bestätigt.

## Patentansprüche

1.    Regeleinrichtung für einen Prozess, in welcher ein Totzonenglied (4) einem linearen dynamischen Regler (6) vorgeschaltet ist zur Reduktion von Stelleingriffen im eingeschwungenen Zustand der Regelung, **dadurch gekennzeichnet, dass** Mittel (5) vorgesehen sind, durch welche das Totzonenglied (4) automatisch deaktivierbar ist, wenn eine Regelabweichung (e) des Regelkreises einen vorgegebenen oder vorgebbaren ersten Schwellwert (s1) überschreitet, wobei im deaktivierten Zustand eine über das Totzonenglied (4) geführte Regelabweichung (e1) von einer eingestellten Totzone unbeeinflusst ist, und durch welche das Totzonenglied (4) automatisch wieder aktivierbar ist, wenn die Regelabweichung (e) einen vorgegebenen oder vorgebbaren zweiten Schwellwert (s2), der kleiner als der erste Schwellwert (s1) ist, unterschreitet.

2.    Regeleinrichtung nach Anspruch 1, **dadurch gekennzeichnet, dass** der erste Schwellwert (s1) gleich der eingestellten Totzonenbreite (D) ist.

**3.** Regeleinrichtung nach Anspruch 1 oder 2, **dadurch gekennzeichnet, dass** der zweite Schwellwert (s2) gleich dem 0,1- bis 0,2fachen der eingestellten Totzonenbreite (D) ist.

**4.** Regeleinrichtung nach einem der Ansprüche 1 bis 3, **dadurch gekennzeichnet, dass** die Regeleinrichtung (1) weiterhin derart ausgebildet ist, dass im deaktivierten Zustand des Totzonenglieds (4) nach Überschreiten des zweiten Schwellwerts (s2) durch die Regelabweichung (e) eine vorgegebene oder vorgebbare Zeitdauer abgewartet wird und erst danach das Totzonenglied (4) automatisch wieder aktivierbar ist, wenn die Regelabweichung (e) kleiner als der zweite Schwellwert (s2) ist.

**5.** Regeleinrichtung nach Anspruch 4, **dadurch gekennzeichnet, dass** die Regeleinrichtung (1) zudem dazu ausgebildet ist, nach erneuter Aktivierung des Totzonengliedes (4) eine Stellgröße (u) auszugeben, welche einem Mittelwert der in einem Zeitfenster zuletzt im deaktiven Zustand des Totzonenglieds (4) ausgegebenen Stellgröße entspricht.

**6.** Regeleinrichtung nach einem der vorhergehenden Ansprüche, **dadurch gekennzeichnet, dass** die Regeleinrichtung (1) einen Überwachungsbaustein zur Bestimmung von mehreren Kenngrößen für das Regelverhalten aufweist und dass zumindest ein Parameter der Regeleinrichtung (1) anhand zumindest einer der Kenngrößen vorbestimmt wird,
wobei als Parameter die Breite (D) der Totzone in Abhängigkeit einer durch den Überwachungsbaustein berechneten Standardabweichung der Regelgröße (x) vorbestimmt wird und/oder
wobei die Zeitdauer, nach welcher das Totzonenglied (4) bei Überschreiten des zweiten Schwellwerts (s2) wieder aktivierbar ist, in Abhängigkeit eines im Überwachungsbaustein eingestellten Zeitfensters, welches charakteristisch für die Dauer von Einschwingvorgängen ist, vorbestimmt wird und/oder wobei der Mittelwert der in dem Zeitfenster zuletzt im deaktiven Zustand des Totzonengliedes (4) ausgegebenen Stellgröße (u) dem im Überwachungsbaustein berechneten Mittelwert der Stellgröße (u) entspricht.

**7.** Verfahren zur Regelung eines Prozesses (2), in welchem ein Totzonenglied (4) einem linearen dynamischen Regler (6) vorgeschaltet ist zur Reduktion von Stelleingriffen im eingeschwungenen Zustand der Regelung, **dadurch gekennzeichnet, dass** das Totzonenglied (4) automatisch deaktiviert wird, wenn eine Regelabweichung (e) des Regelkreises einen vorgegebenen oder vorgebbaren ersten Schwellwert (s1) überschreitet, wobei im deaktiven Zustand eine über das Totzonenglied (4) geführte Regelabweichung (e1) von einer eingestellten Totzone (D) nicht beeinflusst wird, und dass das Totzonenglied (4) automatisch wieder aktiviert wird, wenn die Regelabweichung (e) einen vorgegebenen oder vorgebbaren zweiten Schwellwert (s2), der kleiner als der erste Schwellwert (s1) ist, unterschreitet.

**8.** Computerprogramm mit durch einen Computer ausführbaren Programmcodeanweisungen zur Implementierung des Verfahrens nach Anspruch 7, wenn das Computerprogramm auf einem Computer ausgeführt wird.

**9.** Computerprogrammprodukt, insbesondere Datenträger oder Speichermedium, mit einem durch einen Computer ausführbaren Computerprogramm gemäß Anspruch 8.

**Claims**

**1.** Closed-loop control device for a process, in which a dead band element (4) is connected upstream of a linear dynamic controller (6) in order to reduce actuating interventions in the steady control state, **characterized in that** provision is made of means (5) which can be used to automatically deactivate the dead band element (4) if a control deviation (e) of the control loop exceeds a predefined or predefinable first threshold value (s1), a control deviation (e1) passed via the dead band element (4) not being influenced by a set dead band in the deactivated state, and which can be used to automatically activate the dead band element (4) again if the control deviation (e) undershoots a predefined or predefinable second threshold value (s2) which is less than the first threshold value (s1).

**2.** Closed-loop control device according to Claim 1, **characterized in that** the first threshold value (s1) is equal to the set dead band width (D).

**3.** Closed-loop control device according to Claim 1 or 2, **characterized in that** the second threshold value (s2) is equal to 0.1 to 0.2 times the set dead band width (D).

**4.** Closed-loop control device according to one of Claims 1 to 3, **characterized in that** the closed-loop control device (1) is also designed in such a manner that, in the deactivated state of the dead band element (4) after the second threshold value (s2) has been exceeded by the control deviation (e), the process waits for a predefined or predefinable period and only then can the dead band element (4) be automatically activated again if the control deviation (e) is less than the second threshold value (s2).

**5.** Closed-loop control device according to Claim 4, **characterized in that** the closed-loop control device (1) is also designed, after the dead band element (4) has been activated again, to output a manipulated variable (u) which corresponds to a mean value of the manipulated variable last output in a time window in the inactive state of the dead band element (4).

**6.** Closed-loop control device according to one of the preceding claims, **characterized in that** the closed-loop control device (1) has a monitoring module for determining a plurality of characteristic variables for the control behavior, and **in that** at least one parameter of the closed-loop control device (1) is predetermined using at least one of the characteristic variables,

the width (D) of the dead band being predetermined, as the parameter, on the basis of a standard deviation of the controlled variable (x) calculated by the monitoring module, and/or

the period after which the dead band element (4) can be activated again when the second threshold value (s2) is exceeded being predetermined on the basis of a time window which is set in the monitoring module and is characteristic of the duration of stabilization processes, and/or

the mean value of the manipulated variable (u) last output in the time window in the inactive state of the dead band element (4) corresponding to the mean value of the manipulated variable (u) calculated in the monitoring module.

**7.** Method for controlling a process (2), in which a dead band element (4) is connected upstream of a linear dynamic controller (6) in order to reduce actuating interventions in the steady control state, **characterized in that** the dead band element (4) is automatically deactivated if a control deviation (e) of the control loop exceeds a predefined or predefinable first threshold value (s1), a control deviation (e1) passed via the dead band element (4) not being influenced by a set dead band (D) in the inactive state, and **in that** the dead band element (4) is automatically activated again if the control deviation (e) undershoots a predefined or predefinable second threshold value (s2) which is less than the first threshold value (s1).

**8.** Computer program having program code instructions which can be executed by a computer and are intended to implement the method according to Claim 7 when the computer program is executed on a computer.

**9.** Computer program product, in particular a data carrier or a storage medium, having a computer program according to Claim 8 which can be executed by a computer.

**Revendications**

**1.** Dispositif de régulation d'un processus, dans lequel un élément ( 4 ) de zone morte est monté en avant d'un régleur ( 6 ) dynamique linéaire pour la réduction d'interventions de réglage dans un régime permanent de la régulation, **caractérisé en ce qu'**il est prévu des moyens ( 5 ) par lesquels l'élément ( 4 ) de zone morte peut être désactivé automatiquement si un écart ( e ) de régulation du circuit de régulation dépasse une première valeur ( s1 ) de seuil prescrite ou pouvant l'être, dans lequel, à l'état désactivé, un écart ( e1 ) de régulation, passant par l'élément ( 4 ) de zone morte, n'est pas influencé par une zone morte réglée, et par lequel l'élément ( 4 ) de zone morte peut être réactivé automatiquement, si l'écart ( e ) de régulation devient inférieur à une deuxième valeur ( s2 ) de seuil prescrite ou pouvant l'être, qui est plus petite que la première valeur ( s1 ) de seuil.

**2.** Dispositif de régulation suivant la revendication 1, **caractérisé en ce que** la première valeur ( s1 ) de seuil est égale à la largeur ( D ) de la zone morte réglée.

**3.** Dispositif de régulation suivant la revendication 1 ou 2, **caractérisé en ce que** la deuxième valeur ( s2 ) de seuil est égale à 0,1 à 0,2 fois la largeur ( D ) de zone morte réglée.

**4.** Dispositif de régulation suivant l'une des revendications 1 à 3, **caractérisé en ce que** le dispositif ( 1 ) de régulation est constitué en outre de manière à ce qu'à l'état désactivé de l'élément ( 4 ) de zone morte, après dépassement de la deuxième valeur ( s2 ) de seuil, il est attendu par l'écart ( e ) de régulation une durée prescrite ou pouvant l'être et, après seulement, l'élément ( 4 ) de zone morte peut être réactivé automatiquement, si l'écart ( e ) de régulation est plus petit que la deuxième valeur ( s2 ) de seuil.

**5.** Dispositif de régulation suivant la revendication 4, **caractérisé en ce que** le dispositif ( 1 ) de régulation est constitué en outre pour, après une réactivation de l'élément ( 4 ) de zone morte, émettre une grandeur ( u ) de réglage, qui correspond à une valeur moyenne de la grandeur de réglage émise dans un créneau temporel, en dernier, à l'état inactif de l'élément ( 4 ) de zone morte.

**6.** Dispositif de régulation suivant l'une des revendications précédentes, **caractérisé en ce que** le dispositif ( 1 ) de régulation a un module de contrôle pour la détermination de plusieurs grandeurs caractéristiques pour le comportement de régulation et **en ce qu'**au moins un paramètre du dispositif ( 1 ) de régulation est déterminé à l'avance au moyen de l'une des grandeurs caractéristiques,
dans lequel il est déterminé à l'avance comme paramètre la largeur ( D ) de la zone morte, en fonction d'un écart-type, calculé par le module de contrôle, de la grandeur ( x ) de régulation et/ou
dans lequel, la durée après laquelle l'élément ( 4 ) de zone morte, lors d'un dépassement de la deuxième valeur ( s2 ) de seuil, peut être réactivé, est déterminée à l'avance en fonction d'un créneau temporel réglé dans le module de contrôle et caractéristique de la durée d'opération en régime transitoire et/ou la valeur moyenne de la grandeur ( u ) de réglage émise en dernier dans le créneau temporel à l'état inactif de l'élément ( 4 ) de zone morte correspond à la valeur moyenne de la grandeur ( u ) de réglage calculée dans le module de contrôle.

7. Procédé de régulation d'un processus ( 2 ), dans lequel un élément ( 4 ) de zone morte est monté en avant d'un régleur ( 6 ) dynamique linéaire pour la réduction d'interventions de réglage dans un régime permanent de la régulation, **caractérisé en ce que** l'on désactive automatiquement l'élément ( 4 ) de zone morte si un écart ( e ) de régulation du circuit de régulation dépasse une première valeur ( s1 ) de seuil prescrite ou pouvant l'être, dans lequel, à l'état inactif, un écart ( e1 ) de réglage, passant par l'élément ( 4 ) de zone morte, n'est pas influencé par une zone ( D ) morte réglée et **en ce que** l'on réactive automatiquement l'élément ( 4 ) de zone morte si l'écart ( e ) de régulation devient inférieur à une deuxième valeur ( s2 ) de seuil prescrite ou pouvant l'être, qui est plus petite que la première valeur ( s1 ) de seuil.

8. Programme d'ordinateur ayant des instructions de code de programme pouvant être exécutées par un ordinateur pour la mise en oeuvre du procédé suivant la revendication 7, lorsque le programme d'ordinateur est exécuté sur un ordinateur.

9. Produit de programme d'ordinateur, notamment support de données ou support de mémoire, ayant un programme d'ordinateur pouvant être réalisé par un ordinateur suivant la revendication 8.

## FIG 1

## FIG 2

# FIG 3

FIG 4

FIG 5

FIG 6

# FIG 7

**IN DER BESCHREIBUNG AUFGEFÜHRTE DOKUMENTE**

**In der Beschreibung aufgeführte Patentdokumente**

- DE 3606640 A1
- EP 2228491 A1

**In der Beschreibung aufgeführte Nicht-Patentliteratur**

- Prozessleitsystem PCS 7, PCS 7 Advanced Process Library V71. Marz 2009